# EUROPÄISCHE PATENTSCHRIFT

(11) **EP 1 655 164 B1**
(45) Veröffentlichungstag und Bekanntmachung des Hinweises auf die Patenterteilung: **08.02.2012**
(21) Anmeldenummer: 05110281.2
(22) Anmeldetag: 03.11.2005
(51) Int. Cl.: B60K 17/34

(54) **Auf Vierradantrieb umgerüstetes Kraftfahrzeug**
Converted four wheel drive vehicle
Véhicule transformé en quatre roues motrices

(30) Priorität: 03.11.2004 DE 102004053121
(43) Veröffentlichungstag der Anmeldung: 10.05.2006
(73) Patentinhaber: Iglhaut Gmbh, 97340 Marktbreit (DE)
(72) Erfinder: Iglhaut, Michael, 97342, Oberbreit (DE)
(74) Vertreter: Vogeser, Werner

(56) Entgegenhaltungen:
- EP-A- 0 768 195
- EP-A- 0 876 932
- EP-A2- 0 514 943
- BE-A- 436 788
- GB-A- 2 168 015
- JP-A- 9 188 153
- JP-A- 11 129 772
- JP-A- 59 067 175
- US-A- 2 132 545
- US-A- 2 162 334
- US-A- 5 057 062
- US-A- 5 409 264
- US-A1- 4 432 428

## Beschreibung

### I. Anwendungsgebiet

Die Erfindung betrifft vierradbetriebene Landfahrzeuge.

### II. Technischer Hintergrund

Die Erfindung betrifft vor allem Fahrzeuge, bei denen der Vierradantrieb nachgerüstet wurde.

Dabei wird das ursprünglich zweiradgetriebene Fahrzeug mit antreibbaren Naben an den bisher nicht angetriebenen Rädern ausgestattet, die über Antriebswellen mit der Motor-Getriebe-Einheit verbunden werden, wobei in der Regel ein Verteilergetriebe zwischen Vorderachse und Hinterachse und zusätzlich in der nachgerüsteten Antriebsachse ein Achs-Differential anzuordnen ist.

Um diese Komponenten zusätzlich unter dem Fahrzeugboden unterzubringen, wird der Abstand zwischen dem Fahrzeugboden, also dem Chassis und den darunter befestigten Achskörpern vergrößert. Um bei dem Verteilergetriebe nicht auf neue Eigenkonstruktionen angewiesen zu sein, werden dabei vorzugsweise Zukauf-Verteilergetriebe verwendet, die bereits in anderen vierradgetriebenen Fahrzeugen im Einsatz sind.

Dabei ist jedoch die Auswahl beschränkt, da hierfür nur solche Verteilergetriebe in Frage kommen, die hinsichtlich zwingend erforderlicher Randbedingungen mit denen des umzurüstenden Basisfahrzeuges übereinstimmen.

Ein solcher Faktor ist dabei die Tatsache, ob das Zukauf-Verteilergetriebe bei dem Vierrad-Fahrzeug, aus dem es stammt, an die Motor-Getriebe-Einheit angeflanscht war oder mit dieser über Gelenkwellen verbunden war, was sich in einer entsprechenden Gehäuseform und Gehäuseanschlüssen des Verteilergetriebes äußert.

Aus der US 2,132,545 A ist ein zum Allradfahrzeug umgebauter Pkw bekannt, der einen Motor, ein Getriebe und ein Verteilergetriebe aufweist, wobei das Verteilergetriebe die vom Motor erzeugten Bewegungen auf die Vorder- und Hinterräder überträgt, gemäß dem einleitenden Teil des Anspruchs 1.

Nachteilig bei diesem umgerüsteten Fahrzeug ist, dass das Verteilergetriebe weit nach unten von dem Fahrzeugboden vorsteht, sodass es bei Fahrbahnunebenheiten oftmals zu Kontakt zwischen dem Fahruntergrund und dem Verteilergetriebe kommt.

### III. Darstellung der Erfindung

### a) Technische Aufgabe

Es ist daher die Aufgabe gemäß der Erfindung, ein Kraftfahrzeug mit Vierradantrieb bzw. ein Verteilergetriebe zu schaffen, bei dem die Auswahlmöglichkeit an Verteilergetrieben hinsichtlich der Randbedingungen möglichst groß gehalten wird, und dennoch der Montageaufwand gering bleibt.

### b) Lösung der Aufgabe

Diese Aufgabe wird durch das Kraftfahrzeug mit Vierrad-Antrieb gemäß Anspruch 1 gelöst. Vorteilhafte Ausführungsformen ergeben sich aus den Unteransprüchen.

Durch die Verwendung eines Verteilergetriebes, welches eine offene Flanschseite besitzt, die von einem Verschlusselement verschlossen wird, und Anbindung eines solchen Verteilergetriebes an die Motor-Getriebe-Einheit eines Kraftfahrzeuges über Gelenkwellen wird die Auswahl von zur Verfügung stehenden Verteilergetrieben nicht nur vergrößert, sondern hier steht überhaupt erst eine nennens werte Anzahl von Verteilergetrieben zur Verfügung, die in ihren Originalfahrzeugen in der Regel direkt an die Schaltgetriebe-Ausgänge angeflanscht sind.

Wenn als Verschlusselement eine Verschlussplatte verwendet wird, die die offene Flanschseite verschließt, und diese Verschlussplatte vorzugsweise über die Außenkontur des Gehäuses des Verteilergetriebes vorsteht, kann diese Verschlussplatte zur Befestigung am Chassis, insbesondere an den einen Abstand zueinander aufweisenden Längsträgern des Chassis benutzt werden, und erfüllt damit eine Doppelfunktion.

Die Verschraubung der Platte in den Flanschbohrungen der offenen Flanschsseite des Gehäuses ergibt eine stabile, dichte Verschließung des Verteilergetriebes.

Die Befestigung mittels der nach außen über das Gehäuse vorstehende Enden in Tragelementen, die selbst nur am Chassis verschraubt sind, vermeidet Schweißarbeiten am Ausgangsfahrzeug.

Indem das Verteilergetriebe ein Planetengetriebe umfasst, wird eine hohe Untersetzung bei geringem Bauraum, insbesondere geringer Bauhöhe, also radialer Erstreckung des Verteilergetriebes, ermöglicht, was nur eine geringe Anhebung des Chassis gegenüber den Achskörpern und damit eine unwesentliche Anhebung des Fahrzeugsschwerpunktes ergibt, was sich für das Fahrverhalten positiv auswirkt.

Indem das Verteilergetriebe eine variable Kraftverteilung zwischen den angetriebenen Achsen ermöglicht, insbesondere im Normalfall jedoch die Verteilung in einem festen Verhältnis zwischen Vorder- und Hinterachse zur Verfügung stellt, also einen permanenten Allradantrieb bietet, kann das Verteilergetriebe je nach Fahrsituation optimal hinsichtlich seiner Kraftverteilung auf die einzelnen Achsen gesteuert werden, entweder manuell oder automatisch, indem der Fahrzustand durch Sensoren z. B. an den Rädern, insbesondere durch die ABS-Sensoren, automatisch ermittelt und das Verteilergetriebe damit angesteuert werden kann.

Die Verstellung erfolgt meist durch ein elektrisches Stellglied, z.B. einen Elektromotor, der die entsprechenden Elemente im Verteilergetriebe, meist eine Lamellenkupplung, mehr oder weniger stark schließt, wobei diese Stellglied mittels eines elektrischen Steuersignals und/oder nur manuell ansteuerbar sein kann.

Durch die fluchtende Anordnung des Einganges ins Verteilergetriebe zu dem gegenüberliegenden Ausgang, während der zweite Ausgang seitlich versetzt angeordnet ist, kann bei einem Grundkonzept aus Frontmotor und Heckantrieb des Ausgangsfahrzeuges die grundsätzliche Verlaufsrichtung der Gelenkwelle zur Hinterachse beibehalten werden, indem das Verteilergetriebe in dessen Verlaufsrichtung dazwischen gesetzt wird. Eine starke Verlegung der bereits vorhandenen Gelenkwellen zur Seite ist nicht nötig und damit auch keine Gefahr einer Kollision mit anderen Bauteilen, wie etwa Auspuffsystem etc. gegeben.

Der seitlich versetzte zweite Ausgang für die bisher nicht angetriebene Achse, in diesem Fall die Vorderachse, kann dabei auf die von der Lenkung abgewandte Seite gelegt werden, um genügend Platz, insbesondere für das zwischen den Vorderrädern notwendige Vorderachsdifferential, zu schaffen. Bei einem linksgelenkten Fahrzeug wird dies die rechte Seite sein, aufgrund der auf der linken Seite vorhandenen Lenksäule und des Lenkgetriebes.

Durch das Befestigen des Vorderachs-Differentials an einem - vorzugsweise darunter - verlaufenden Hilfsrahmen, der zusätzlich zum Vorderachskörper vorhanden ist, kann auch das Vorderachsgetriebe, am Chassis verschraubt werden, ohne Zusatzversteifungen etc. am Chassisboden verschweißen zu müssen, indem der Hilfsrahmen an vorhandenen Befestigungsmöglichkeiten am Chassis, insbesondere an vom Vorderachs-Differential entfernten Längsträgern der Bodengruppe oder dem Vorderachskörper, benutzt werden können.

Ebenso wie bei der Befestigung des zusätzlich benötigten Achsdifferentials wird beim gesamten Vierrad-Umrüstvorgang darauf geachtet, alle nachträglich benötigten Komponenten und deren Befestigungsvorrichtungen mittels Verschraubung am vorhandenen Chassis zu befestigen, insbesondere an den dort vorhandenen Gewindebohrungen, und auf Schweißvorgänge auch am Chassis insbesondere vollständig zu verzichten.

Vorzugsweise werden für die Verschraubungen bereits am Chassis vorhandene Gewindebohrungen benutzt.

Selbst wenn zur Unterbringung der zusätzlichen Komponenten am Chassis oder an den Achskörpern Material entfernt werden muss, also z. B. Profile ausgeschnitten werden müssen, werden diese nicht durch Einschweißen von passenden Teilen verschlossen und verstärkt, sondern durch darüber gelegte und verschraubte Verstärkungselemente, die diese Materialentfernungen vorzugsweise verschließen, beispielsweise durch in den Verstärkungselementen vorhandene, geschlossene Ausbuchtungen entsprechend den in den Profilen und Verstärkungen hergestellten Ausnehmungen.

Da das Verteilergetriebe einen Kettentrieb umfasst, wird trotz der Bauform eines Zweiwellen-Getriebes zwischen Eingang und dem abseits liegenden Ausgang die Drehrichtung dieses Ausgangs gleichbleibend mit dem des Eingangs beibehalten.

Aufgrund der Anordnung der Schaltelemente für das Schaltgetriebe der Motor-Getriebe-Einheit am hinteren, freien Ende des Schaltgetriebes ist bei der Anordnung von zusätzlichen Komponenten wie zusätzlichem Achs-Differential oder dem Verteilergetriebe bzw. den dorthin führenden Wellen darauf zu achten , dass keine Kollisionen mit diesen Schaltelementen entstehen.

Durch die Verbindung des Schaltgetriebes mit dem Verteilergetriebe über eine Gelenkwelle (die sowohl einen Zwischen-Winkel und insbesondere auch einen Achsversatz zwischen Eingangs- und Ausgangsrichtung der Welle verkraftet), kann deren Abstand und Positionierung optimal gewählt werden, um solche Kollisionen zu vermeiden und andererseits das Verteilergetriebe im optimalen Winkel unter dem Fahrzeugboden anbringen zu können und z.B. den Abstand vom Schaltgetriebe zum Verteilergetriebe so gering zu wählen, dass das Verteilergetriebe mit den Querträgern des Unterbodens nicht bzw. nur mit möglichst wenig kollidiert, die hierfür ausgenommen werden müssen.

Auch die Winkelpositionierung des Verteilergetriebes kann dadurch so gewählt werden, dass eine eventuelle Ausbuchtung nach oben im Fahrzeugboden möglichst kleinflächig und von der Höhe möglichst gering ausfallen kann.

Auch die Ausbuchtung im Fahrzeugboden wird vorzugsweise mittels eines übergelegten, verschraubten, abgedichteten Bleches hergestellt.

Für die Verbindung der Motor-Getriebe-Einheit und des Verteilergetriebes werden statt einfachen Kreuzgelenken so genannte homokinetische Gleichlaufgelenke verwendet, die aufgrund ihrer gekapselten Bauform zwar einen etwas größeren Durchmesser besitzen, als ein normales Kreuzgelenk, aber den Vorteil einer immer gleichen Winkelgeschwindigkeit sowie eines begrenzten Längenausgleiches neben der gekapselten Bauform aufweisen.

Bei einer Ausgangsbauform mit Heckantrieb, bei dem die nötige Motor-Getriebe-Einheit in Längsrichtung verlaufend vor der Vorderachse eingebaut ist, wird dabei insbesondere das zusätzliche Verteilergetriebe ebenfalls in Längsrichtung in den Antriebsstrang zur Hinterachse eingesetzt, insbesondere mit der offenen Flanschsseite nach vorne weisend.

Das Verteilergetriebe kann aufgrund seiner Bauform einen Untersetzungsfaktor von mindestens 2,0 aufweisen, sowie einen Sperrmechanismus, der im aktivierten Zustand Vorderachse und Hinterachse gleich schnell antreibt, während ohne Aktivierung ein Kraft-Verteilungsfaktor (z. B. ca. 65 : 35) vorliegt oder sogar eine variable Verteilung entsprechend den fahrdynamisch ständig ermittelten Parametern.

Durch eine zusätzliche Sperrvorrichtung auch in einem, insbesondere in beiden, Achs-Differentialen für eine für eine gleiche Drehzahl an den beiden Rädern dieser Achse, kann eine übereinstimmende Drehzahl an allen 4 Rädern erzielt werden und damit eine optimale Geländegängigkeit.

Falls die nachträglich mit Antrieb ausgestatte Achse die Vorderachse ist, wird das Vorderachs-Differential und vorzugsweise die Lage des Verteilergetriebes hinsichtlich des Seitenversatzes seines Ausganges nach vorne so angeordnet, dass er sich auf der von der Lenkposition gegenüberliegenden Seite der Längsmitte befindet, also bei europäischen Fahrzeugen auf der rechten Seite.

Hinsichtlich der Höhenlage befindet sich dabei das Vorderachs-Differential vorzugsweise oberhalb des Vorderachs-Körpers und wenigstens teilweise unterhalb der Motor-Getriebe-Einheit, wobei der verdickte, kugelähnliche Bereich des Gehäuses des Vorderachs-Differentials bis unterhalb des Vorderachs-Körpers herabragen kann und auch in den Höhenbereich der Motor-Getriebe-Einheit, jedoch seitlich versetzt zu dieser, nach oben ragen kann, da dies eine optimal niedrige, zusätzliche Beabstandung zwischen dem Vorderachs-Körper und dem Chassis ergibt.

Die Durchführung des Antriebes in Querrichtung unterhalb der Motor-Getriebe-Einheit erfolgt vorzugsweise dadurch, dass der in Querrichtung abstehende Fortsatz des Vorderachs-Differentials zum weiter entfernten, in diesem Fall dem linken, Vorderrad so lang gestaltet ist, dass sich dieser Fortsatz unter der gesamten Motor-Getriebe-Einheit hindurch erstreckt.

Dies hat den Zweck, dass die am Ende des Fortsatzes austretende Gelenkwelle, in der als Gelenke vorzugsweise homokinetische Gleichlaufgelenke verwendet werden, die einen relativ großen Außendurchmesser besitzen, sich bereits seitlich neben der Motor-Getriebe-Einheit befinden und dadurch teilweise neben dem Gehäuse der Motor-Getriebe-Einheit nach oben ragen können, was ebenfalls nur eine geringe vertikale Beabstandung zwischen Chassis und Vorderachs-Körper nach sich zieht.

Die Aufhängung des Verteilergetriebes unter dem Fahrzeugboden erfolgt vorzugsweise an drei Aufhängepunkten, zwei im vorderen Bereich, also nahe der durch das Verschlusselement verschlossenen Flanschseite, und einem am hinteren, im wesentlichen geschlossenen Ende des Gehäuses des Verteilergetriebes.

Dabei befinden sich die vorderen beiden Verbindungsvorrichtungen an dem Verschlusselement, insbesondere an der nach vorne gerichteten Frontfläche des Verschlusselementes, insbesondere der Verschlussplatte und insbesondere an deren seitlich über den Außenumfang des Gehäuses des Verteilergetriebes vorstehenden Fortsätzen.

Bei der Befestigungsvorrichtung handelt es sich um die üblichen gabelförmigen bzw. buchsenförmigen Aufnahmen für buchsenförmige Gummilager, die in ihrer Axialrichtung von einem Bolzen durchdrungen werden.

Insbesondere ist dabei an den äußeren Enden der Verschlussplatte jeweils eine Buchse mit etwa vertikaler Achsrichtung angeschweißt, in der die Gummibuchse angeordnet werden kann. Diese Buchsen werden in längsverlaufende, zur Fahrzeugmitte hin offene U-Profile eingeschoben und der Gewindebolzen in deren quer in die U-Profile eingeschweißte Querwände verschraubt, wobei diese U-Profile unter den Längsträgern des Fahrzeugchassis in den dort vorhandenen Befestigungsbohrungen mit Innengewinde für die Quertraverse zum Tragen der Motor-Getriebe-Einheit verschraubt werden, die das hintere freie Ende der Motor-Getriebe-Einheit abstützt.

Diese Quertraverse wird über den am Längsträger anliegenden Schenkel des U-Profils gelegt und mitverschraubt, und dementsprechend muss diese zusätzliche, durch den Schenkel des U-Profils bedingte, Beabstandung der Quertraverse an dessen Halterung gegenüber der Motor-Getriebe-Einheit ebenfalls durch eine zusätzliche Abstandsvergrößerung mittels eines Distanzelements zwischengelegt werden. Auf zusätzliche Bohrungen in den Längsträgern und gar zusätzliche Einschweißungen kann auf diese Art und Weise jedoch verzichtet werden.

Die U-Profile sind dabei insbesondere unter dem schräg nach hinten abfallenden Abschnitt der Längstraversen verschraubt und damit in einer Orientierung - betrachtet in Seitenansicht - ähnlich der Schrägstellung des Verteilergetriebes.

Dennoch stimmt die ebenfalls nicht horizontal sondern in der Regel schräg nach hinten unten gerichtete Orientierung der Motor-Getriebe-Einheit nicht mehr mit derjenigen des Verteilergetriebes überein, sondern differiert um ca. 0° - 8°, insbesondere um 1° - 3°. Dadurch kann jedoch das Verteilergetriebe auf eine optimal platzsparende Art und an der optimalen Stelle unter dem Fahrzeugboden angeordnet werden.

Der Hilfsrahmen zum Befestigen des Vorderachs-Differentials vermeidet ebenfalls ein Anschweißen von Befestigungslaschen, Zusatzverstärkungen und Ähnlichem unter dem Fahrzeugboden. Dieser Hilfsrahmen weist eine hintere Quertraverse auf, die mit ihren Enden an den hinteren Auslegern des X-förmigen Vorderachskörpers, insbesondere den dort vorhandenen Gewindebohrungen für die Torsionsstab-Lagerbuchsen, verschraubt ist.

Von dieser Quertraverse aus läuft eine Tragplatte horizontal nach vorne und ist mit ihrem vorderen Ende auf oder vor dem Vorderachs-Körper verschraubt.

Auf der Tragplatte ist sowohl der zur Seite abstehende Fortsatz des Vorderachs-Differentials befestigt, als auch der nach hinten weisende Fortsatz, jeweils gefedert und gedämpft z. B. über Gummilager-Buchsen.

Das schräg nach vorne, von den beiden Fortsätzen wegweisende, Außeneck des winkelförmigen Vorderachs-Differentials ist dagegen mit dem Distanzhalter, der hinter dem Vorderrad zwischen Motorlager und Vorderachs-Körper den Zusatzabstand bewirkt, verschraubt.

Im Übrigen sind weitere Distanzhalter vor und hinter den Vorderrädern über Streben, ähnlich einer Domstrebe, die über die Antriebswellen und unter dem Chassis hinweg verlaufen, gegeneinander stabilisiert.

### c) Ausführungsbeispiele

Ausführungsformen gemäß der Erfindung sind im Folgenden beispielhaft näher beschrieben. Es zeigen:
- Fig. 1:: eine Prinzipdarstellung des Ausgangsfahrzeuges,
- Fig. 2:: den Vierrad-Antriebstrang,
- Fig. 3:: das Verteilergetriebe in Schnittdarstellung,
- Fig. 4:: die Verschlussplatte des Verteilergetriebes,
- Fig. 5:: die damit zusammenwirkende Befestigungsvorrichtung,
- Fig. 6:: die hintere Aufhängung des Verteilergetriebes,
- Fig. 7:: die damit zusammenwirkende Befestigungsvorrichtung,
- Fig. 8:: die Befestigung für das Vorderachs-Differential, und
- Fig. 9:: perspektivische Darstellungen im Bereich der Vorderachse mit unterschiedlich vollständiger Komponentenausstattung.

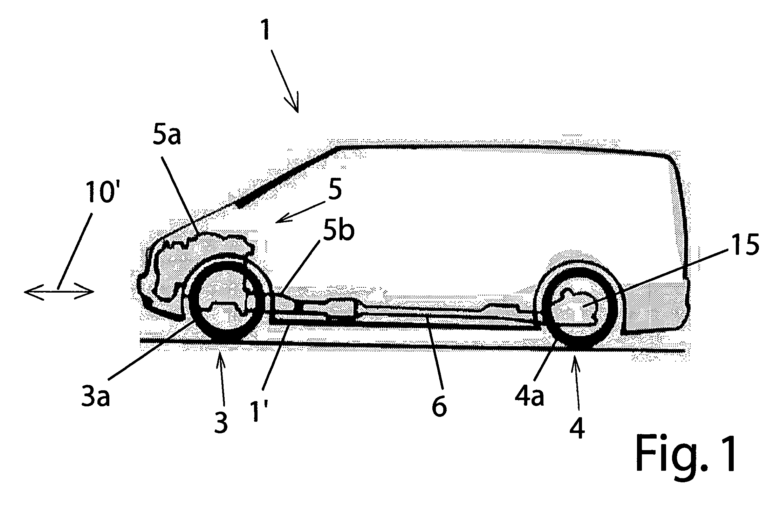

Fig. 1 zeigt als Stand der Technik in der Seitenansicht ein übliches zweiradgetriebenes Kraftfahrzeug 1 mit dem Chassis 1' eines Transporters. Der angedeutete Antriebsstrang lässt erkennen, dass über die vorn sitzende Motor-Getriebe-Einheit 5 mittels einer unter dem Fahrzeugboden bzw. im Bereich des Fahrzeugbodens 11 nach hinten verlaufenden Gelenkwelle 6 die Räder z. B. 4a der Hinterachse 4 angetrieben werden, weshalb dort, also zwischen den Rädern, ein Hinterachs-Differential 15 sitzt, welches mit der Gelenkwelle verbunden ist und in bekannter Weise die Antriebskraft auf die beiden Hinterräder 4a, b verteilt.

Der über bzw. vor der Vorderachse 3 sitzende Motor 5a ist ebenso wie das unmittelbar dahinter daran angeflanschte Schaltgetriebe 5b in Längsrichtung 10 verlaufend eingebaut.

Mit der Aufrüstung zum erfindungsgemäßen Vierradantriebe soll erreicht werden, dass auch die bisher nicht angetriebenen Vorderräder, z. B. 3a der Vorderachse 3, ebenfalls angetrieben werden.

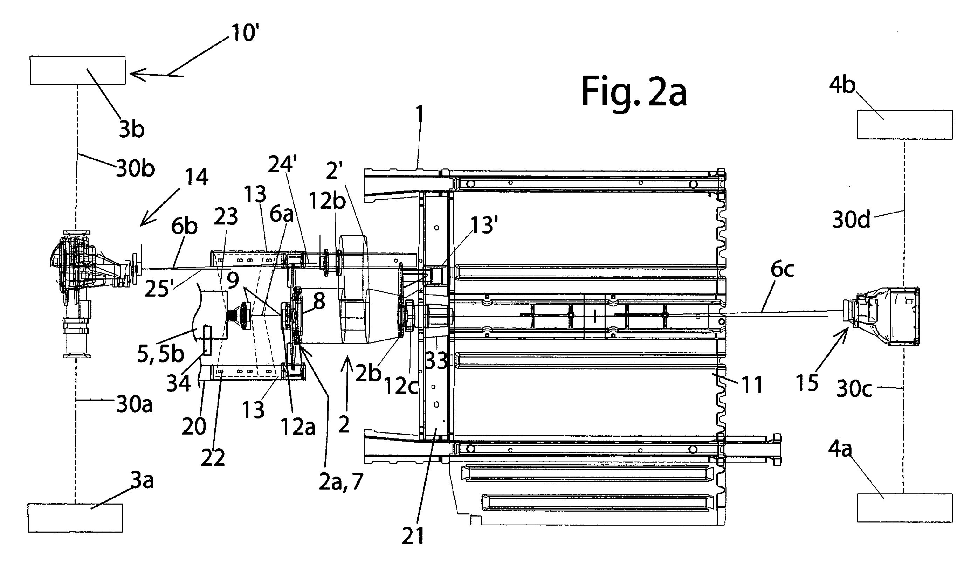

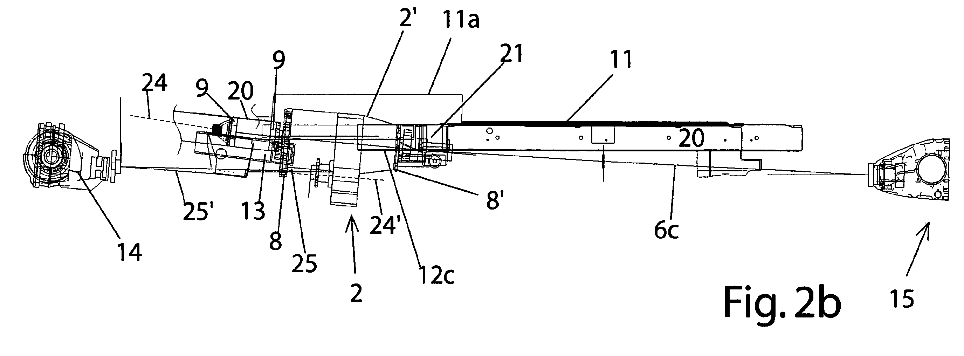

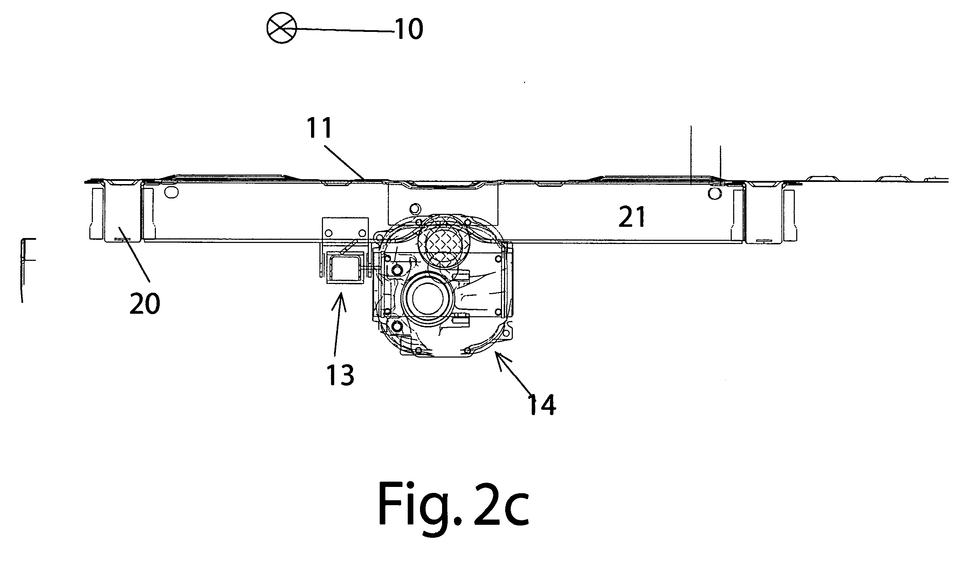

Einen derartig vervollständigten Antriebsstrang zeigen die Fig. 2.

In der Aufsicht der Fig. 2a ist zu erkennen, dass hierzu in die Antriebsverbindung zwischen dem hinteren Ende der Motor-Getriebe-Einheit 5 und dem schon bisher vorhandenen Hinterachs-Differential 15, von dem aus die Hinterräder 4a, b bereits bisher über Antriebswellen 30a, b angetrieben wurden, ein Verteilergetriebe 2 eingesetzt ist:

Das Verteilergetriebe 2 besitzt einen zu seinem frontseitigem Eingang 12a fluchtenden Ausgang 12c nach hinten, sowie einen demgegenüber versetzten, in Richtung des Eingangs weisenden, zweiten Ausgang 12b, wobei das stirnseitige Ende 2a, an dem sich der Eingang 12a befindet, als offene Flanschseite 7 ausgebildet ist, während das andere stirnseitige Ende 2b ein bis auf den Ausgang für die Welle geschlossenes Gehäuse 2' aufweist.

Das Verteilergetriebe 2 wird dabei mit seinem Eingang 12a knapp hinter dem hinteren Ausgangsende der Motor-Getriebe-Einheit 5, also dem hinteren Ende dessen Schaltgetriebe 5b, unter dem Fahrzeugboden 11 positioniert mit seiner Durchgangsachse vom Eingang 12a zum damit fluchtenden Ausgang 12c etwa fluchtend zur Längsrichtung und dem Ausgang des Schaltgetriebes 5b.

Die Verbindung dazwischen erfolgt über eine Gelenkwelle 6a, die in ihren Endbereichen jeweils ein homokinetisches Gleichlaufgelenk aufweist, wie es auch in den Antriebswellen 30a, b.. zu den Rädern hin verwendet wird, um den Vorteil eines gleitenden Beugens und vor allem eine 1:1 Weitergabe der Winkelgeschwindigkeit von einer Seite des Gelenkes zu nutzen.

Da das Verteilergetriebe 2 mit seiner Durchgangslinie auf der Linie der ursprünglichen Gelenkwelle zwischen Schaltgetriebe 5b und Hinterachs-Differential 15 montiert wird, liegt die von dem mit dem Eingang 12a fluchtenden Ausgang 12c des Verteilergetriebes 2 dann zum Hinterachs-Differential 15 führende Gelenkwelle 6c an der selben Position, insbesondere Querposition muss also nicht verlegt werden, so dass keine Kollisionen mit benachbarten Bauteilen wie etwa dem Auspuffstrang, verlegten Bremsleitungen, Kraftstoffleitungen oder ähnlichem zu berücksichtigen sind.

Allerdings reicht das Verteilergetriebe 2, auch wenn es möglichst weit vorn an der Motor-Getriebe-Einheit 5 montiert wird, mit seiner hinteren Stirnseite 2b soweit nach hinten, dass entweder für das hintere Ende des Gehäuses 2' oder für das sich daran anschließende verdickte erste Gelenk der nach hinten führenden Gelenkwelle 6c eine Ausnehmung 33 in dem Querträger 21 des Chassis 1' notwendig ist, der dort als Profil vom Boden 11 aus nach unten ragt, wie in Fig. 2b zu erkennen.

Der zweite Ausgang 12b des Verteilergetriebes 2, der in die gleiche Richtung weist wie der Eingang 12a, befindet sich gegenüber dem Hauptteil des Gehäuses 2' des Verteilergetriebes in Vorwärtsrichtung 10' betrachtet nach rechts versetzt, und ist nach vorne offen, so dass dort eine Gelenkwelle 6b nach vorn verlaufend zu dem im Bereich der Vorderachse vorhandenen zusätzlichen Vorderachs-Differential 14, welches über die angedeuteten Antriebswellen 30a, b die Räder 3a, b der Vorderachse 3 antreibt.

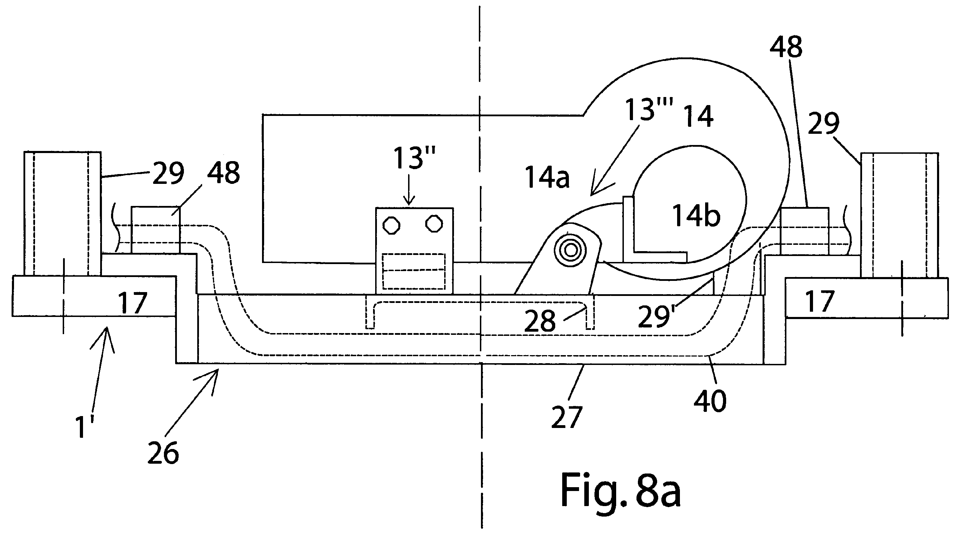

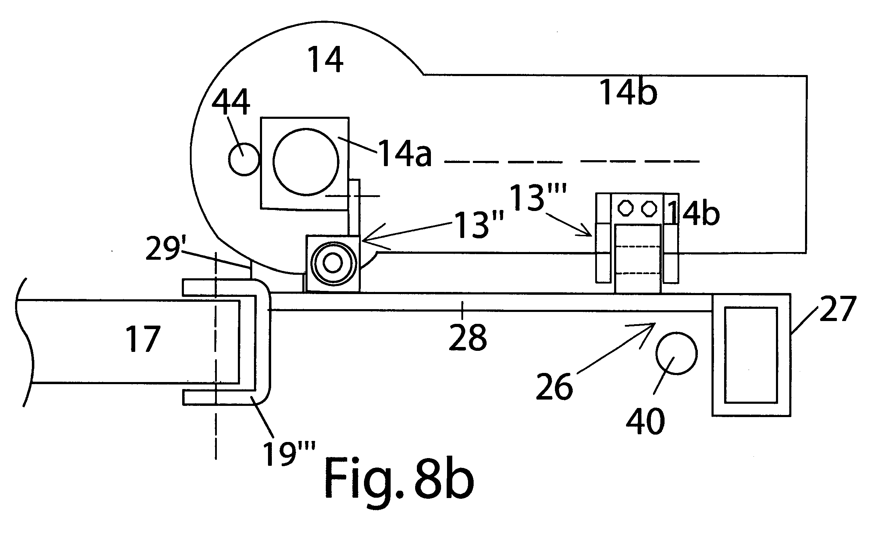

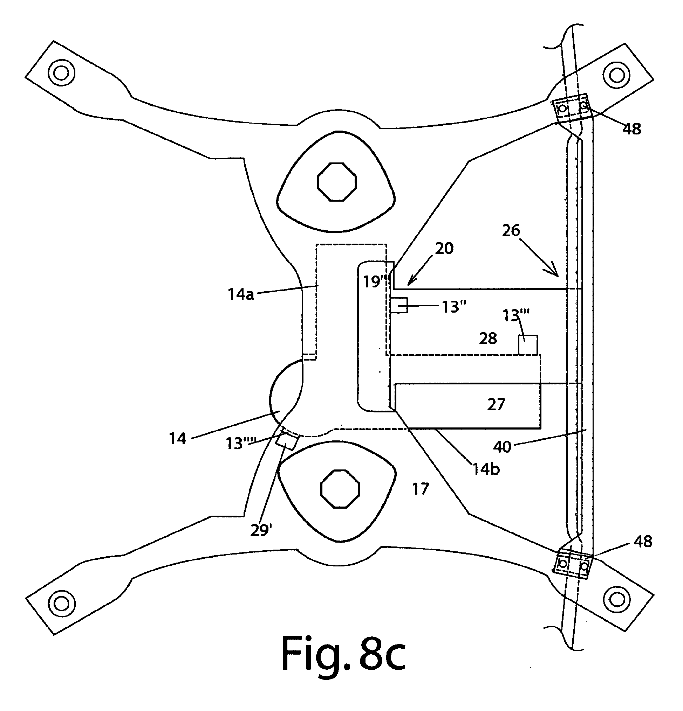

Allerdings stimmen Eingangsrichtungen bzw. Ausgangsrichtungen der miteinander gekoppelten Komponenten, also des Verteilergetriebes 2 einerseits mit Motor-Getriebe-Einheit 5 und den beiden Achs-Differentialen 14, 15 andererseits, nicht exakt überein, um das Verteilergetriebe 2 so positionieren zu können, dass einerseits die notwendige Abstandsvergrößerung zwischen Chassis 1' und Achskörper 17, 18 möglichst gering ausfällt (wie anhand der Fig. 8 erläutert) und andererseits die Ausbuchtung 11a im Fahrzeugboden 11 nach oben zur Aufnahme des Verteilergetriebes 2 darunter möglichst gering ausfallen kann, und dennoch die Knickstellungen der Gelenkwellen 6 so gering wie möglich ausfallen, um eine hohe Laufruhe des Antriebsstranges zu gewährleisten.

So zeigt beispielsweise Fig. 2a, dass die Ausgangsrichtung 24' des nach vorn gerichteten Ausganges 12b des Verteilergetriebes 2 um 0° - 5°, insbesondere1° - 3°, gegenüber der Eingangsrichtung 25' des Vorderachs-Differentials 14 differiert, und ebenso die Ausgangsrichtung des nach hinten gerichteten Ausganges 12c um 0° - 5°, insbesondere1° - 3°, gegenüber der Eingangsrichtung des HinterachsDifferentials 15.

Ebenso zeigt Fig. 2b, dass in der Seitenansicht Ausgangs- und Eingangsrichtung zwischen Verteilergetriebe 2 und Hinterachs-Differential 15 um 0° - 8°, insbesondere 3° - 5° differieren, und die Ausgangsrichtung 24' und Eingangsrichtung 25' zwischen Verteilergetriebe 2 und Vorderachs-Differential 14 auch in der Seitenansicht um 0° - 5°, insbesondere1 ° - 3°differieren.

In der Seitenansicht der Fig. 2b zeigt sich ebenso, dass selbst die Ausgangsrichtung 24 des Schaltgetriebes nicht mit der Eingangsrichtung 25 und Eingang 12a übereinstimmt, obwohl beide nicht horizontal, sondern schräg nach unten abfallend angeordnet sind, aber dennoch eine Winkeldifferenz trotz der kurzen Verbindungslänge dazwischen von 0° - 5°, insbesondere1° - 3°, besteht.

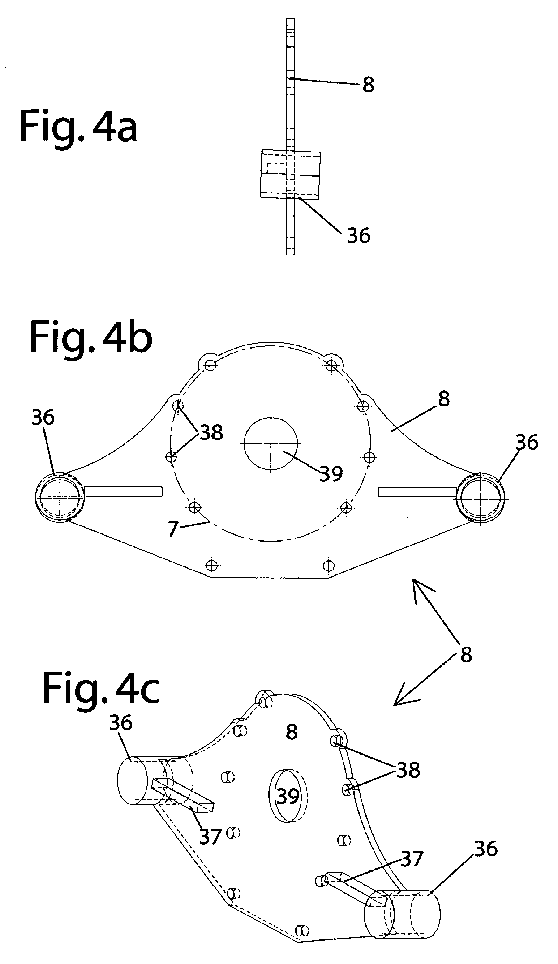

Die Fig. 2, vor allem Fig. 2a, zeigen auch die Art der Befestigung des Verteilergetriebes 2 unter dem Boden 11 des Chassis 1' ausschließlich mittels Verschraubung, wobei die Einzelteile in den Fig. 4 bis 7 dargestellt sind:

Das Verteilergetriebe 2 wird mittels drei Aufhängepunkte am Chassis 1' verschraubt. Auf der nach vorn gerichteten, offenen Flanschseite 7 ist eine Verschlussplatte auf die Flanschseite des Gehäuses 2' aufgeschraubt, die deutlich größer ist, als der etwa kreisförmige Außenumfanges des Gehäuses 2' an der Flanschseite 7, in Fig. 4 ersichtlich durch die gestrichelte Linie, auf der die Befestigungsbohrungen 38 liegen, deren Position vorgegeben ist durch, die Gewindelöcher in der Stirnseite des Gehäuses 2'.

Im Zentrum der kreisförmig angeordneten Bohrungen 38 ist die zentrale Öffnung 39 für das Austreten der Gelenkwelle 6a vorhanden. Zu beiden Seiten steht die Verschlussplatte 8 vor, und in diesen seitlich vorstehenden Enden sind Hülse 36 aus Metall mit ihrer Axialrichtung quer, fasst lotrecht, zur Ebene der Platte 8 an diese angeschweißt, wobei der Abstand der Hülsen 36 etwa dem Abstand der Längsträger 20 unter dem Fahrzeugboden entspricht, der an dieser Stelle in Längsrichtung 10 verlaufen mit einer Schrägstellung in der Seitenansicht von vorne nach hinten unten.

In die zylindrischen Hülsen 36 werden zur Federung und Dämpfung nicht dargestellte Gummibuchsen passgenau eingesteckt, die von einem zentralen Gewindebolzen 23 aus Metall in Längsrichtung durchdrungen werden, der mit seinen in Längsrichtung vorstehenden Enden an jeweils einer Befestigungsvorrichtung 13 verschraubt wird, die ihrerseits mit dem Chassis 1' fest verbunden, in diesem Fall ebenfalls verschraubt, sind:

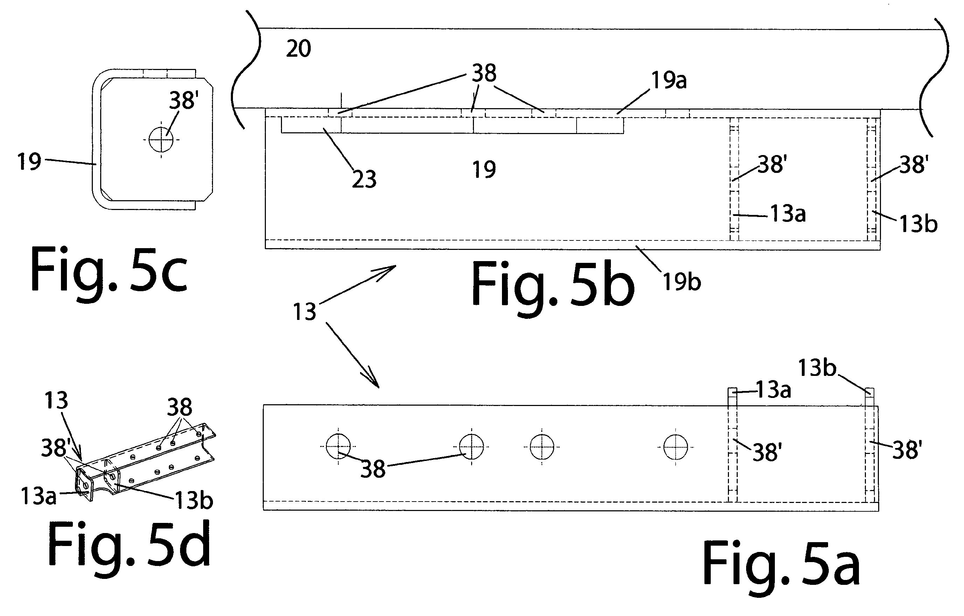

Diese in Fig. 5 dargestellten Befestigungsvorrichtungen 13 bestehen aus einem U-Profil 19, nahe dessen Endbereich Querwände 13a, b beabstandet zueinander, nämlich entsprechend der Länge der Hülsen 36, in den freien Innenraum des U-Profils 19 eingeschweißt sind.

Etwa in der Mitte der Querwände 13a, b weisen diese jeweils eine zueinander fluchtende Bohrung 38' auf, so dass der durch den Gummizylinder in den Hülsen 36 verlaufende Gewindebolzen mit seinen Enden sich durch die Bohrungen 38' der Querwände 13a, b erstreckt und dort verschraubt wird, wenn sich die Buchse 36 jeweils zwischen zwei Querwänden 13a, b einer Befestigungsvorrichtung 13 befindet.

Die Befestigungsvorrichtungen 13 ihrerseits sind - wie in Fig. 2a, b zu erkennen - mittels Bohrungen 38' die entlang eines der freien Schenkel 19a der Befestigungsvorrichtung 13 angeordnet sind, auf der Unterseite des Längsträgers 20 verschraubt, der in Fig. 5b eingezeichnet ist, und zwar dort im Original vorhandenen Befestigungsbohrungen 22, so dass nicht nur keine Schweißarbeiten nötig sind, sondern nicht einmal zusätzliche Gewindebohrungen im Chassis eingebracht werden müssen.

In diesen Befestigungsbohrungen 22 waren ursprünglich beim Originalfahrzeug die Enden einer quer zwischen den Längsträgern 20 verschraubten Quertraverse 23 verschraubt, die in Fig. 2a angedeutet ist und dem Abstützen des hinteren Endes des Schaltgetriebes 5b und damit der Motor-Getriebe-Einheit 5 nach unten diente.

Wie in Fig. 5b dargestellt, wird der mit dem Längsträger 20 verschraubte Schenkel 19a des U-Profils 19, welche ja mit ihrer offenen Seite zur Fahrzeuglängsmitte hin und gegeneinander gerichtet so angeordnet werden, dass sich die Kammer zwischen den Querwänden 13a, b für das Gummilager an ihrem hinteren Enden befindet, zwischen dem Längsträger 20 und der Quertraverse 23 verschraubt. Da die Quertraverse 23 dadurch um die Dicke dieses Schenkels 19a relativ zum abstützenden Ende der Getriebe-Einheit 5b tiefer gelangt, muss zwischen SchaltGetriebe 5b und der Quertraverse 23 ein Distanzplättchen mit dieser Dicke zwischengelegt werden.

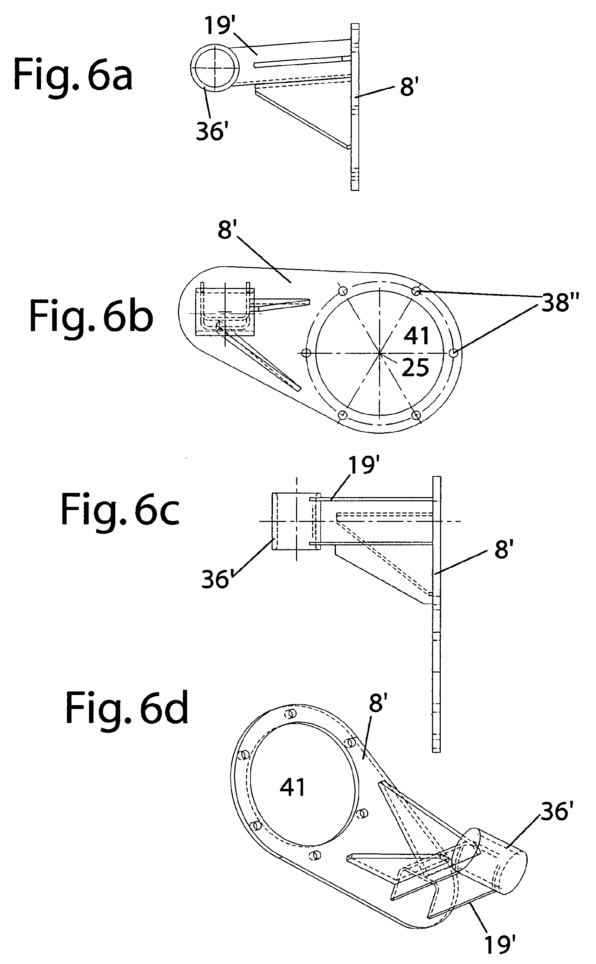

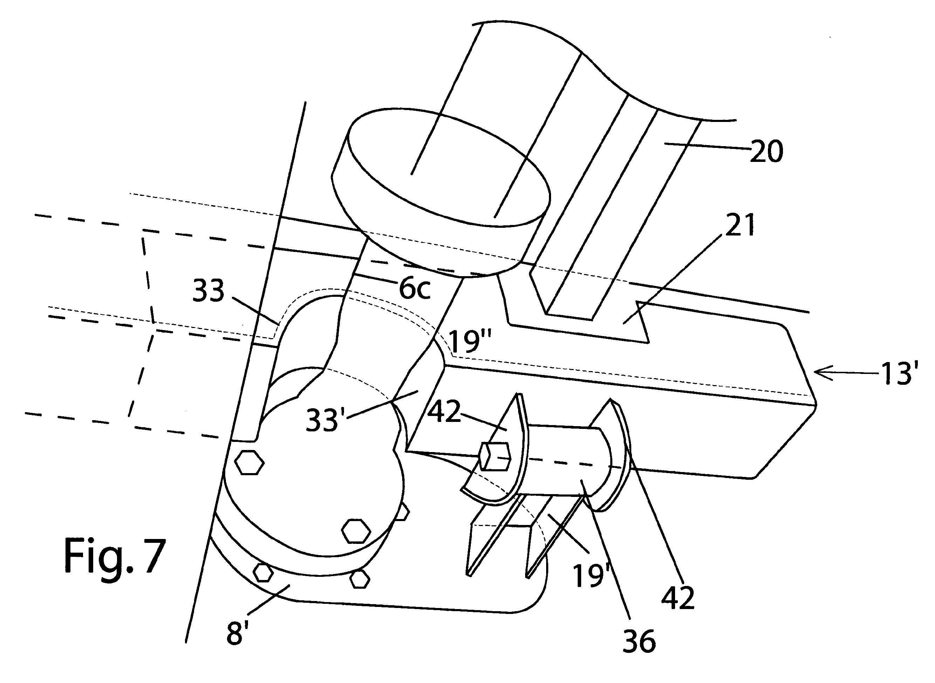

Nahe der anderen Stirnseite 2b ist das Gehäuse 2' des Verteilergetriebes 2 gegenüber dem Boden des Chassis 1' abgehängt und verschraubt mittels einer Befestigungsplatte 8' (Fig. 6) die am Gehäuse 2' des Verteilergetriebes 2 verschraubt ist und ihrerseits über wiederum eine Gummilagerbuchse mit einer Befestigungsvorrichtung 13' (Fig. 7) verbunden, die am Chassis verschraubt ist.

Die Befestigungsplatte 8' ist etwa eiförmig gestaltet mit einem Durchlass 41 im dickeren Ende, durch den sich das hintere, im wesentlichen geschlossene -Ende des Gehäuses 2' hindurcherstreckt, so dass die vom konisch zulaufenden Gehäuseende zurückversetzten Befestigungsbohrungen mit den Bohrungen 38" fluchten, die in der Platte 8' um den Durchlass 41 herum angeordnet sind, zum Verschrauben am Gehäuse 2'.

Im montierten Zustand steht also auch diese Platte 8' wie die Verschlussplatte 8 quer zur Durchlaufrichtung 25 des Verteilergetriebes 2.

In der Aufsicht auf die Platte 8' betrachtet ist im Bereich des schmaleren Endes der Platte 8' wiederum eine Hülse 36' zur Aufnahme eines zylindrischen Vollgummi-Lagers, wie zuvor beschrieben, im Abstand zur Platte 8' angeordnet, jedoch diesmal mit der Längsrichtung der Hülse 36' parallel zur Platte 8.

Zwischen Hülse 36' und Platte 8' ist ein U-Profil 19' als Abstandshalter eingeschweißt, welches mit zusätzlichen dreieckigen Verstrebungen gegenüber der Platte 8' versteift ist.

Die Buchse 36' wird mittels des darin aufgenommen Gummilagers zwischen zwei Haltelaschen 42 verschraubt, die Bestandteil der Befestigungsvorrichtung 13' sind, welche im wesentlichen aus einem passenden U-Profil 19" besteht, welches über den nach unten vorstehenden Querträger 21 des Chassis hutförmig von unten übergestülpt und mit diesem verschraubt, vernietet und/oder verklebt wird, und von dem diese Haltelaschen 42 nach unten abragen.

Aufgrund der sehr hoch liegenden Positionierung des Verteilergetriebes 2 und insbesondere dessen Ausgang 12c, also nur knapp unter dem Blech des Bodens 11, muss für den Verlauf der Gelenkwelle 6c zum Hinterachs-Differential 15 eine Ausnehmung 33 in dem vom Bodenblech 11 nach unten ragenden Querträger 21 ausgeschnitten werden.

Da sich das U-Profil 19" der Befestigungsvorrichtung 13', welches mit diesem Querträger 21 lediglich verschraubt wird, sich über den Abschnitt der Ausnehmung 33 hinweg erstreckt, muss auch in diesem U-Profil 19" eine entsprechende Ausbuchtung 33' in Forme eines gewölbten Blecheinsatzes vorhanden sein, welche allerdings vollumfänglich mit dem U-Profil 19" verschweißt ist, um eine steife Verstärkung zu bilden, so dass dieses U-Profil 19" dann eine zum verbindenden Schenkel des U-Profils 19" offene Ausbuchtung 33 aufweist, entsprechend der Größe und Form der Ausnehmung 33 im Querträger 21.

Um den den Querträger 21 kreuzenden Längsträger 20 herum ist das U-Profil 19" der Befestigungsvorrichtung 13' ausgespart.

Die Anordnung und Befestigung des zusätzlich eingebauten Vorderachs-Differentials 14 ist wie folgt gelöst:

Fig. 2b zeigt, dass das Vorderachs-Differential 14 zwischen den Vorderrädern 3a, b rechts von der Mitte angeordnet ist.

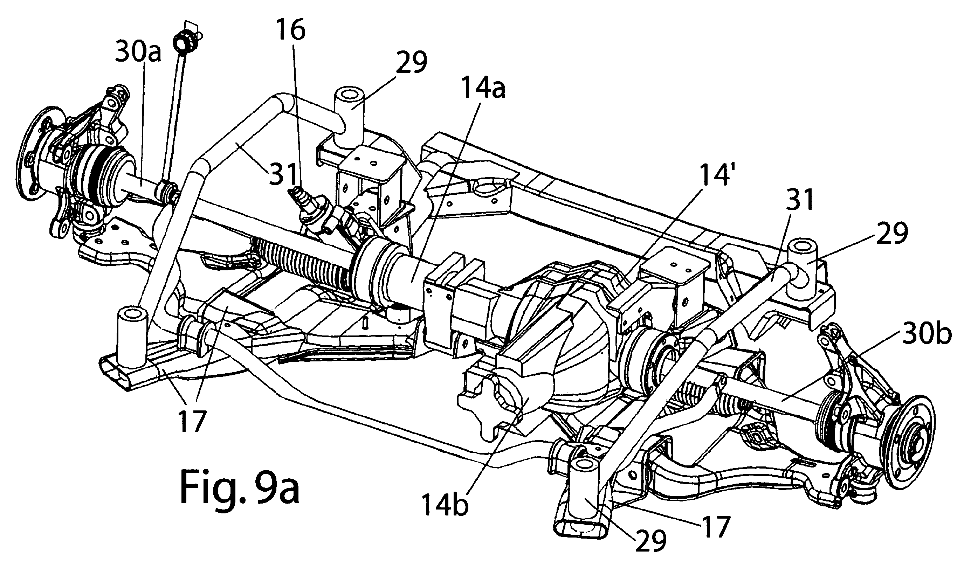

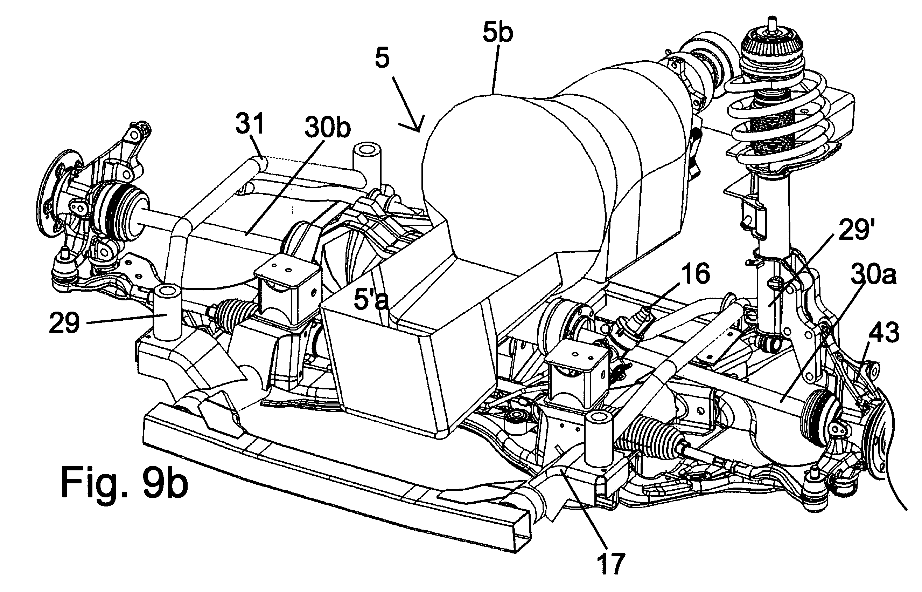

Wie die Figuren 8 und 9 zeigen, ist das Gehäuse 14' des Vorderachs-Differentials 14 ist dabei winkelförmig ausgebildet, mit einem verdickten Eckbereich, in dem das Differential-Getriebe untergebracht ist, und von dem ein Fortsatz 14a zur Seite, in diesem Fall nach links, abstrebt und ein weiterer Fortsatz 14b nach hinten.

An den freien Enden dieser Fortätze 14a, b werden die Gelenkwelle 30c zum linken Vorderrad 3a sowie die vom dahinter liegenden Verteilergetriebe 2 herangeführte Gelenkwelle 6b zum Antrieb des Vorderachs-Differentials 14 angesetzt.

Im verdickten Eckbereich findet sich ein weiterer Ausgang zum Anschließen der Antriebswelle 30b, die zum rechten Vorderrad 3b führt.

Wie die perspektivischen Darstellungen des Vorderachs-Bereiches der Fig. 9a und 9b zeigen, befindet sich die Lenksäule 16 links vom Ende des Fortsatzes 14a, wobei der Fortsatz 14a so lang ausgebildet ist, dass er unter dem Motor 5a, der in Fig. 9b nur als Bauraumbegrenzung 5'a eingezeichnet ist, hindurch verläuft und sich bereits das anschließende Wellengelenk der Welle 30a, welches einen größeren Durchmesser als der Fortsatz aufweist, auf der linken Seite des Motors 5a befindet.

Die Fig. 9a, b zeigen ferner, dass der Abstand zwischen dem in diesem Fall Vorderachs-Körper 17 und dem in den Fig. nicht dargestellten Chassis 1' vergrößert wurde durch Einsetzen von Distanzhaltern 29, die in diesem Fall hülsenförmig und aufrecht stehend zwischen dem Achskörper 17 und dem Chassis 1' verschraubt sind, unter anderem um in der Höhe den Platz für das Vorderachs-Differential 14 und vor allem dessen unter der Motor-Getriebe-Einheit 5 hindurch laufenden Fortsatz 14a zu schaffen.

Die beiden Distanzhalter 29 einer Seite sind jeweils über eine bogenförmig nach oben über die Antriebswelle 30 gewölbte Strebe 31 miteinander verbunden und gegeneinander stabilisiert.

Um die Original-Federbeine in ihren Originalbefestigungspunkten am oberen Ende am Chassis 1' verwenden zu können, sind um die gleiche Höhendistanz der Distanzhalter 29 Verlängerungselemente 29' zwischen dem unterem Ende des Federbeines und den hierfür vorgesehenen Verschraubungspunkten am Achsschenkel 43 vorgesehen.

Die Figuren 8 zeigen die Befestigung des Vorderachs-Differentials 14 am Chassis 1', die in den Fig. 9 nicht dargestellt ist:

Das Vorderachs-Differential 14 ist an drei Befestigungspunkten (Befestigungsvorrichtungen 13", 13''' und 13"") aufgenommen, von denen der eine nahe des freien Endes des nach links weisenden Fortsatzes 14a, der andere an der Außenecke der kugelförmigen Verdickung im Eckbereich und der dritte am nach hinten weisenden Fortsatz 14b angeordnet ist.

Das Vorderachs-Differential 14 wird dabei an seinem rechten Außeneck über eine Gummilagerbuchse mit einer Befestigungsvorrichtung 13"" verschraubt, die an einem Distanzhalter 29' bereits angeschweißt ist, welcher dieselbe Höherlegung wie die übrigen Distanzhalter 29 bewirkt, aber an dem den Motor-Getriebe-Block am Vorderachskörper abstützenden Motorlager zum Höhenausgleich angeordnet ist.

Der linke vordere, sowie der hintere Befestigungspunkt werden dagegen gegenüber einem Hilfsrahmen 26 verschraubt, der sich unterhalb des Vorderachs-Differentials 14 liegend erstreckt und mit dem Vorderachskörper 17 ebenfalls nur verschraubt wird. Er besteht im wesentlichen aus einer hinteren Quertraverse 27, die quer zwischen den linken und rechten, nach hinten weisenden Armen des X-förmigen Vorderachskörpers 17 verläuft und mit ihren Enden in den dort bereits vorhandenen Gewindebohrungen für die Lagerbuchsen des Torsionsstabes 40 verschraubt ist.

Von dieser Quertraverse 27, die etwa auf der Längsposition des hinteren Endes des Fortsatzes 14b des Vorderachs-Differentials 14 montiert ist, erstreckt sich ein Längsträger 20 in der Mitte nach vorne, der im wesentlich aus einer Tragplatte 28 mit nach außen unten abgebogenen Längskanten besteht, sowie einem am vorderen Ende der Tragplatte 28 querverlaufenden U-Profil 19"', welches mit seiner nach vorn weisenden offenen Seite auf die Hinterkante des Vorderachs-Körpers 17 aufgeschoben und mit diesem verschraubt ist.

Auf der Oberseite des Längsträgers 20 befinden sich die Befestigungsvorrichtungen 13" und 13''' mit Befestigungslaschen, um die beiden genannten Befestigungspunkte des Vorderachsdifferentials daran zu verschrauben, jeweils - wie auch den rechten vorderen Befestigungspunkt - wieder über die zuvor beschriebenen, bekannten Gummibuchsenlager zur Federung und Dämpfung des Vorderachs-Differentials 14 gegenüber dem Achskörper 17.

Dabei liegen die Gummizylinder mit ihrer Axialrichtung bei der vorderen linken sowie der hinteren Befestigungsvorrichtung 13" und 13''' jeweils parallel zur Verlaufsrichtung des jeweiligen Fortsatzes 14a, b.

Bei der hinteren Befestigungsvorrichtung 13''' liegt der Gummizylinder in Fahrtrichtung betrachtet links von dem nach hinten weisenden Fortsatz 14b und damit gegenüber diesem Fortsatz 14b zur Mitte hin versetzt und somit bereits über der in der Mitte verlaufenden Tragplatte 28.

Bei der vorderen linken Befestigungsvorrichtung 13" liegt der Gummizylinder noch unterhalb und hinter dem Fortsatz 14a und die entsprechenden Befestigungslaschen sind auf der Rückseite des Fortsatzes 14a verschraubt, um auf der Vorderseite Platz für den Geber 44 zu schaffen, über den das Vorderachs-Differential 14 gesperrt werden kann.

Zusätzlich ist die Quertraverse 27 als Vierkantrohr ausgebildet und so positioniert, dass der vom linken zum rechten Vorderrad 3a,b durchgehende Torsionsstab 40, der in den seitlichen Bereichen mehrfach gekröpft ist, in seinem mittleren Bereich parallel zur Quertraverse 27 nach vorne versetzt verläuft, und seine in den Außenbereichen vorhandenen gummigelagerten Lagerbuchsen 48 ebenfalls gegenüber dem Vorderachskörper, zusammen mit der Quertraverse 27, insbesondere auf der Oberseite des Vorderachskörpers 17, verschraubt sind.

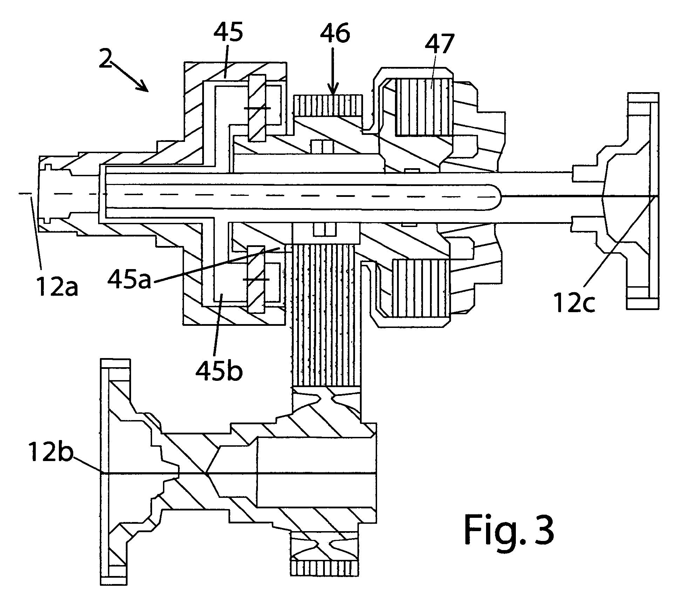

Fig. 3 zeigt einen Längsschnitt durch das Verteilergetriebe 2 als Prinzipdarstellung:

Koaxial zum Drehmoment-Eingang 12a und dem damit fluchtend angeordneten, gegenüberliegenden Ausgang 12c ist ein Planetengetriebe 45 angeordnet, dessen Außenkäfig mit der Eingangswelle drehfest verbunden ist und dessen Sonnenrad mit einer koaxial versetzten Riemenscheibe drehfest verbunden ist, die über einen Riemen oder eine Gliederkette und damit als Riementrieb 46 ein querab versetztes Ritzel antreibt, welches koaxial zu und drehfest mit dem weiteren Ausgang 12b angeordnet ist.

Das Planetenrad dagegen ist mit dem zum Eingang fluchtenden Ausgang 12c drehfest verbunden.

Zusätzlich ist eine Lamellenkupplung 47 koaxial zum Planetengetriebe so angeordnet, dass bei geschlossener Lamellenkupplung 47 die Ausgangswellen der beiden Ausgängen 12b, c drehfest miteinander gekoppelt sind. Dann ist das Verteilergetriebe gesperrt und es werden Vorderachse und Hinterachse mit der gleichen Drehzahl angetrieben.

### BEZUGSZEICHENLISTE

- 1: Kraftfahrzeug
- 1': Chassis
- 2: Verteiler-Getriebe
- 2': Gehäuse
- 2a, b: Stirnseite
- 3: Vorderachse
- 3a, b: Rad
- 4: Hinterachse
- 4a, b: Rad
- 5: Motor-Getriebe-Einheit
- 5a: Motor
- 5b: Schaltgetriebe
- 6a, b, c: Gelenkwelle
- 7: Flanschsseite
- 8: Verschlussplatte
- 8': Befestigungsplatte
- 9a, b: homokinetische Gleichlaufgelenke
- 10: Längsrichtung
- 10': Vorwärtsrichtung
- 11: Boden
- 11a: Ausbuchtung
- 12a: Eingang
- 12b, c: Ausgang
- 13a, b: Querwände
- 13-13"": Befestigungsvorrichtung
- 14: Vorderachs-Differential
- 14a, b: Fortsatz
- 15: Hinterachs-Differential
- 16: Lenksäule
- 17: Vorderachs-Körper
- 18: Hinterachs-Körper
- 19: U-Profil
- 19": U-Profil
- 19: feie Schenkel I
- 20: Längsträger
- 21: Querträger
- 22: Befestigungsbohrung
- 23: Quertraverse
- 24: Richtung
- 25: Richtung
- 26: Hilfsrahmen
- 26': Längs-Schenkel
- 27: Quertraverse
- 28: Tragplatte
- 29: Distanzhalter
- 30a, b, c: Antriebswelle
- 31: Strebe
- 32: Tragvorrichtung hinteres Verteilergetriebe
- 32a: U-Profil hinteres Verteilergetriebe
- 33: Ausnehmung
- 33': Ausbuchtung
- 34: Schalthebel
- 35: Kettentrieb
- 36, 36': Hülse
- 37: Vertiefung
- 38 - 38": Bohrung
- 39: zentrale Öffnung
- 40: Torsionsstab
- 41: Durchlass
- 42: Haltelasche
- 43: Achsschenkel
- 44: Geber
- 45: Planetengetriebe
- 46: Riemengetriebe
- 47: Lamellenkupplung
- 48: Lagerbuchse
- 49: Gewindebolzen

## Patentansprüche

1. Kraftfahrzeug (1) mit Vierrad-Antrieb, welches ein Verteilergetriebe (2) zur Verteilung der Antriebskraft auf die Räder (3a, b) der Vorderachse (3) einerseits und die Räder der Hinterachse (4) andererseits umfasst, wobei
- eine Motor-Getriebe-Einheit (5) des Kraftfahrzeuges (1) über eine Gelenkwelle (6a) mit dem Eingang (12a) des Verteilergetriebes (2) wirkverbunden ist,
- das Verteilergetriebe (2) an einer seiner Stirnseiten eine offene Flanschseite (7) aufweist, die von einem Verschlusselement abgedeckt wird,
**dadurch gekennzeichnet, dass**
- ein Chassis (1') des Kraftfahrzeuges einen Querträger (21) umfasst, in dem eine nach unten offene Ausnehmung (33) angeordnet ist,
- das von der Flanschseite abgewandte Ende des Verteilergetriebes (2) mittels einer Befestigungsvorrichtung (13') am Chassis (1') befestigt ist, die ein U-Profil (19") umfasst, welches den Querträger (21) des Chassis (1') abdeckt, indem es hutförmig von unten über den Querträger (21) überstülpbar ist, und wobei auch in dem U-Profil eine der Ausnehmung (33) entsprechende, Ausbuchtung (33') vorhanden ist.

2. Kraftfahrzeug (1) nach Anspruch 1,
**dadurch gekennzeichnet, dass**
ein Vorderachs-Differential (14) an einem darunter verlaufenden Hilfsrahmen (26) verschraubt ist, der seinerseits mit dem Vorderachskörper (17) verbunden ist.

3. Kraftfahrzeug (1) nach einem der vorhergehenden Ansprüche,
**dadurch gekennzeichnet, dass,**
- das Verteilergetriebe (2) zuschaltbare Untersetzungs-Stufen bei einem Untersetzungsfaktor von mindestens 2,0 aufweist,
- und/oder das Verteilergetriebe (2) mittels homokinetischer Gleichlaufgelenke (9) mit der Motor-Getriebe-Einheit (5) verbunden ist.

4. Kraftfahrzeug (1) nach einem der vorhergehenden Ansprüche,
**dadurch gekennzeichnet, dass**
das Verteilergetriebe (2) auf der Flanschseite (7) über Befestigungsvorrichtungen (13) zur Befestigung am Chassis (1') des Fahrzeuges (1) verfügt, die außerhalb des dortigen Außenumfanges des Gehäuses (2') des Verteilergetriebes (2) an dem Verschlusselement, angeordnet sind, und insbesondere das Verschlusselement über die dortige Außenkontur des Gehäuses (2') des Verteilergetriebes (2) vorsteht.

5. Kraftfahrzeug (1) nach einem der vorhergehenden Ansprüche,
**dadurch gekennzeichnet, dass**
- das Verteilergetriebe (2) einen Sperrmechanismus zur Drehzahl-Gleichschaltung von Vorderachse und Hinterachse aufweist und ohne Aktivierung des Sperrmechanismus die Kraft in einem vorbestimmten Verhältnis zwischen Vorderachse und Hinterachse verteilt wird, mehrheitlich, aber nicht vollständig, an die Hinterachse, und insbesondere
- die Verstellung der Kraftverteilung mittels eines elektrischen Steuersignals an das Verteilergetriebe möglich ist.

6. Kraftfahrzeug (1) nach einem der vorhergehenden Ansprüche,
**dadurch gekennzeichnet, dass**
- das Verteilergetriebe (2) unter einer nach oben gerichteten Ausbuchtung (11a) des Fahrzeugsbodens (11) angeordnet ist, deren Abdeckung am Fahrzeugboden (11) insbesondere verschraubt ist.

7. Kraftfahrzeug nach einem der vorhergehenden Ansprüche 2-6 wenn abhängig vom Anspruch 2,
**dadurch gekennzeichnet, dass**
- das Vorderachs-Differential (14) auf der der Lenksäule (16) gegenüberliegenden Seite der Motor-Getriebe-Einheit (5) und oberhalb des Vorderachskörpers (17) und wenigstens teilweise unterhalb der Motor-Getriebe-Einheit (5) angeordnet ist und insbesondere
- das Vorderachs-Differential (14) zum linken Rad hin einen Fortsatz (14a) seines Gehäuses (14') aufweist, der sich unter der Motor-Getriebe-Einheit (5) hindurch erstreckt bis zur gegenüberliegenden linken Seite.

8. Kraftfahrzeug (1) nach einem der vorhergehenden Ansprüche,
**dadurch gekennzeichnet, dass**
- die Befestigungsvorrichtung (13) des Verschlusselementes, insbesondere einer Verschlussplatte (8), auf der Flanschseite (7) des Verteilergetriebes (2) in U-Profilen (19) gelagert sind, die unter den Längsträgern (20) des Kraftfahrzeuges (1) verschraubt sind.

9. Kraftfahrzeug (1) nach Anspruch 8,
**dadurch gekennzeichnet, dass**
die U-Profile (19) in den vorhandenen Befestigungsbohrungen (22) der Längsträger (20) für die Quertraverse (23) zum Tragen des hinteren Endes der Motor-Getriebe-Einheit (5) verschraubt sind.

10. Kraftfahrzeug (1) nach Anspruch 9,
**dadurch gekennzeichnet, dass**
die Quertraverse (23) unter Zwischenlage des einen Schenkels des U-Profils (19) an den Längsträgern (20) verschraubt ist und in der Mitte der Quertraverse (23) zwischen einem Gummilager zur Abstützung des Schaltgetriebes (5b) und der Quertraverse (23) ein Abstandshalter entsprechend der Dicke des U-Profil-Schenkels angeordnet ist.

11. Kraftfahrzeug (1) nach einem der vorhergehenden Ansprüche 2-10,
**dadurch gekennzeichnet, dass**
in der Aufsicht betrachtet die Ausgangsrichtungen des Verteilergetriebes (2) nicht mit den Eingangsrichtungen der Achsdifferentiale (14, 15) fluchten, sondern um 0° bis 5°, insbesondere um 1° bis 3°, differieren.

12. Kraftfahrzeug (1) nach einem der vorhergehenden Ansprüche 2-11 wenn abhängig vom Anspruch 2,
**dadurch gekennzeichnet, dass**
- der Hilfsrahmen (26) eine hintere Quertraverse (27) aufweist, die mit ihren Enden im Vorderachskörper (17) verschraubt ist und von deren Mitte aus ein Längsträger (20) horizontal nach vorne verläuft, der auf dem VorderAchskörper (17) verschraubt ist.

13. Kraftfahrzeug nach einem der vorhergehenden Ansprüche 2-12,
**dadurch gekennzeichnet, dass**
- auf der Tragplatte (28) des Hilfsrahmens (26) sowohl der quer zur gegenüberliegende Seite abragende Fortsatz (14a) des Vorderachs-Differentials (14) als auch der nach hinten weisende Fortsatz (14b) des Vorderachs-Differentials (14) befestigt sind.

14. Kraftfahrzeug (1) nach einem der vorhergehenden Ansprüche wenn abhängig vom Anspruch 2,
**dadurch gekennzeichnet, dass**
- das vordere Außeneck des winkelförmigen Vorderachs-Differentials (14) mit einem Distanzhalter (29'), der die Höhe des Motorlagers zwischen Vorderachskörper (17) und der Motor-Getriebe-Einheit (5) vergrößert, verschraubt ist.

15. Kraftfahrzeug (1) nach einem der vorhergehenden Ansprüche,
**dadurch gekennzeichnet, dass**
- das Verteilergetriebe (2) so hoch relativ zum Chassis (1') angeordnet ist, dass für die Gelenkwelle (6c) zur Hinterachse (4) eine Ausnehmung (33) im Querträger (21) des Chassis (1') vorhanden ist.

## Claims

1. A motor vehicle (1) with four wheel drive, comprising
a distributor transmission (2) for distributing a drive force to wheels (3a, b) of a front axle (3) on the one hand side and to wheels of a rear axle (4) on the other hand side
- wherein an engine - transmission unit (5) of the motor vehicle (1) is operatively connected through an articulating drive shaft (6a) with an input (12a) of the distributor transmission (2),
- wherein the distributor transmission includes an open flange side (7) at one of its face sides, wherein the open flange side is covered by a closure element,
- wherein a frame (1') of the motor vehicle includes a transversal beam (21) in which a recess (33) is arranged which is open in downward direction,
- wherein an end of the distributor transmission oriented away from the flange side is attached at the frame (1') through an attachment device (13'), wherein the attachment device includes a U-Profile (19") which covers the transversal beam (21) of the frame (1'), in that the U-shaped profile is slideable over the transversal beam (21) from below like a cap, and wherein a bulge that corresponds to the recess (33') is provided in the U-profile.

2. The motor vehicle (1) according to claim 1, wherein a front axle differential (14)
is bolted to a sub-frame (26) extending thereunder, wherein the sub-frame is connected with the front axle element (17).

3. The motor vehicle (1) according to one of the preceding claims,
- wherein the distributor transmission (2) includes shiftable step down stages with a step down factor of at least 2.0, and/or,
- wherein the distributor transmission (2) is connected with the motor - transmission unit (5) through homo kinetic constant speed joints (9).

4. The motor vehicle (1) according to one of the preceding claims, wherein the distributor transmission (2) includes on its flange side (7) attachment devices (13) for attaching to the frame (1') of the vehicle (1), wherein the attachment devices are arranged outside of an outer circumference of the housing (2') of the distributor transmission (2) at the closure element, and in particular the closure elements protrudes beyond the outer contour of the housing (2') of the distributor transmission (2).

5. The motor vehicle (1) according to one of the preceding claims,
- wherein the distributor transmission (2) includes a locking device for synchronizing a speed of the front axle and of the rear axle, wherein the force is divided in a predetermined ratio between the front axle and the rear axle without activating the locking mechanism with a major portion of the force but not the entire force going to the rear axle and in particular,
- wherein an adjustment of the force distribution is provided through an electric control signal to the distributor transmission.

6. The motor vehicle (1) according to one of the preceding claims, wherein the distributor transmission (2) is arranged under an upward oriented bulge (11a) of the vehicle base (11), whose cover is in particular bolted to the vehicle base (11).

7. The motor vehicle (1) according to one of the preceding claims 2 - 6 as far as dependent from claim 2,
- wherein the front axle differential (14) is arranged on a side of the engine-transmission unit (5) opposite to a steering column and above the front axle element (17) and at least partially below the engine - transmission unit (5) and in particular,
- wherein, the front axle differential (14) includes a protrusion (14a) of its housing (14') towards the left wheel, wherein the protrusion extends under the engine - transmission unit (5) to the opposite left side.

8. The motor vehicle (1) according to one of the preceding claims,
- wherein the attachment device (13) of the closure element, in particular of a closure plate (8) is supported on the flange side (7) of the distributor transmission (2) in U-profiles (19) which are bolted on below the longitudinal beams (20) of the motor vehicle (1).

9. The motor vehicle (1) according to claim 8, wherein the U-profiles (19) are bolted down in the existing attachment bore holes (22) of the longitudinal supports (20) for the transversal beam (23) for supporting the rear end of the engine - transmission unit (5).

10. The motor vehicle (1) according to claim 9, wherein the transversal beam (23) is bolted to the longitudinal beams (20) with an arm of a U-profile (19) placed there between and a spacer corresponding to a thickness of the U-profile arm is arranged in the center of the transversal beam (23) between a rubber bearing for supporting the shifting transmission (5b) and the transversal beam (23).

11. The motor vehicle (1) according to one of the preceding claims 2 - 10, wherein the output directions of the distributor transmission (2) are not aligned with the input directions of the axle differential (14, 15) but differ by 0° to 5°, in particular 1° to 3° in a top view.

12. The motor vehicle (1) according to one of the preceding claims 2 - 11, when dependent from claim 2,
- wherein the auxiliary frame (26) includes a rear transversal beam (27) which is bolted to front axle element (17) with its ends and wherein a longitudinal beam (20) extends from a center of the rear transversal beam (27) in horizontal forward direction,
wherein the longitudinal transversal beam is bolted to the front axle element (17).

13. The motor vehicle (1) according to one of the preceding claims 2 - 12,
- wherein the protrusion (14a) of the front axle differential (14) protruding transversal to an opposite side and also the backward oriented protrusion (14b) of the front axle differential axle (14) are attached at the support plate (28) of the sub-frame (26) .

14. The motor vehicle (1) according to one of the preceding claims when depending from claim 2,
- wherein a front outer corner of the angled front axle differential (14) is bolted together with a spacer (29') which increases a height of an engine support between the front axle elements (14) and the engine - transmission unit 5.

15. The motor vehicle (1) according to one of the preceding claims,
- wherein the distributor transmission (2) is arranged high enough relative to the chassis (1) so that a recess (33) in the transversal beam (21) of the frame (11) is provided for the articulating power transmission shaft to the rear axle (4).

## Revendications

1. Véhicule automobile (1) à quatre roues motrices, qui comprend une boîte de transfert (2) pour la répartition de la force motrice sur les roues (3a, b) de l'essieu avant (3) d'une part et les roues de l'essieu arrière (4) d'autre part,
- une unité motoréductrice (5) du véhicule automobile (1) étant reliée activement par un cardant (6a) à l'entrée (12a) de la boite de transfert (2),
- la boîte de transfert (2) présentant sur une de ses faces avant une face de flasque ouverte (7), qui est recouverte par un élément de fermeture,
**caractérisé en ce qu'**un châssis (1') du véhicule automobile comprend une traverse (21) dans laquelle est disposé un évidement (33) ouvert vers le bas,
- l'extrémité de la boîte de transfert (2) opposée à la face de flasque est fixée au moyen d'un dispositif de fixation (13') sur le châssis (1') qui comprend un profilé en U (19"), qui recouvre la traverse (21) du châssis (1), dans le fait qu'il peut être placé comme un chapeau par le bas sur la traverse (21), et également un bombement (33') correspondant à l'évidement (33) existant dans le profilé en U.

2. Véhicule automobile (1) selon la revendication 1, **caractérisé en ce qu'**un différentiel d'essieu avant (14) est vissé à un cadre auxiliaire (26), qui se trouvent en dessous et qui est relié pour sa part au corps d'essieu avant (17).

3. Véhicule automobile (1) selon l'une des revendications précédentes, **caractérisé en ce que** la boîte de transfert (2) présente des étages de réduction enclenchables d'un facteur de réduction d'au moins 2,0,
- et/ou la boîte de transfert (2) est reliée à l'unité motoréductrice (5) au moyen d'articulations homocinétiques (9).

4. Véhicule automobile (1) selon l'une des revendications précédentes, **caractérisé en ce que** la boîte de transfert (2) dispose sur la face de flasque (7) de dispositifs de fixation (13) pour la fixation sur le châssis (1') du véhicule (1), lesquels sont disposés à l'extérieur de la périphérie externe du carter (2') de la boîte de transfert (2) sur l'élément de fermeture et en particulier l'élément de fermeture fait saillie au-delà du contour externe local du carter (2') de la boîte de transfert (2).

5. Véhicule automobile (1) selon l'une des revendications précédentes, **caractérisé en ce que**
- la boîte de transfert (2) présente un mécanisme de blocage pour la synchronisation de l'essieu avant et de l'essieu arrière et sans activation du mécanisme de blocage, la force est répartie entre l'essieu avant et l'essieu arrière dans un rapport prédéterminé, en majorité, mais pas entièrement sur l'essieu arrière et en particulier,
- le décalage de la répartition de la force est possible au moyen d'un signal de commande électrique sur la boite de transfert.

6. Véhicule automobile (1) selon l'une des revendications précédentes, **caractérisé en ce que** la boîte de transfert (2) est disposée en dessous d'un bombement dirigé vers le bas (11a) du sol de véhicule (11) dont le couvercle est en particulier vissé sur le sol de véhicule (11).

7. Véhicule automobile (1) selon l'une des revendications précédentes 2 à 6, si dépendant de la revendication 2, **caractérisé en ce que** le différentiel d'essieu avant (14) est disposé sur la face de l'unité motoréductrice (5), opposée à la colonne de direction (16), et au-dessus du corps d'essieu avant (17), et au moins partiellement en dessous de l'unité motoréductrice (5) et en particulier,
- le différentiel d'essieu avant (14) présente en direction de la roue gauche un prolongement (14a) de son carter (14') qui s'étend en dessous de l'unité motoréductrice (5) jusqu'à la face gauche opposée.

8. Véhicule automobile (1) selon l'une des revendications précédentes, **caractérisé en ce que**
- les dispositifs de fixation (13) de l'élément de fermeture, en particulier d'une plaque de fermeture (8), sont logés sur la face de flasque (7) de la boite de transfert (2) dans des profilés en U (19), qui sont vissés dans les longerons (20) du véhicule automobile (1).

9. Véhicule automobile (1) selon la revendication 8, **caractérisé en ce que** les profilés en U (19) sont vissés dans les perçages de fixation existants (22) des longerons (20) pour la traverse (23) afin de supporter l'extrémité arrière de l'unité motoréductrice (5).

10. Véhicule automobile (1) selon la revendication 9, **caractérisé en ce que** la traverse (23) est vissée en intercalant une branche du profilé en U (19) sur les longerons (20) et un écarteur correspondant à l'épaisseur de la branche de profilé en U est disposé au milieu de la traverse (23) entre un palier en caoutchouc pour le support de la boîte de vitesse (5b) et de la traverse (23).

11. Véhicule automobile (1) selon l'une des revendications précédentes 2 à 10, **caractérisé en ce qu'**observé en vue de dessus, les directions de sortie de la boite de transfert (2) ne sont pas alignées avec les directions d'entrée des différentiels d'essieu (14, 15), mais divergent de 0° à 5°, en particulier de 1° à 3°.

12. Véhicule automobile (1) selon l'une des revendications précédentes 2 à 11, si dépendant de la revendication 2" **caractérisé en ce que** le cadre auxiliaire (26) présente une traverse arrière (27) qui est vissée par ses extrémités dans le corps d'essieu avant (17) et depuis le milieu desquelles s'étend un longeron (20) horizontalement vers l'avant, qui est vissé sur le corps d'essieu avant (17).

13. Véhicule automobile selon l'une des revendications précédentes 2 à 12, **caractérisé en ce qu'**autant le prolongement (14a) faisant saillie transversalement à la face opposée, du différentiel d'essieu avant (14), que le prolongement (14b) du différentiel d'essieu avant (14), dirigé vers l'arrière, sont fixés sur la plaque support (28) du cadre auxiliaire (26).

14. Véhicule automobile (1) selon l'une des revendications précédentes, si dépendant de la revendication 2, **caractérisé en ce que** le coin externe avant du différentiel angulaire d'essieu avant (14) est vissé à un écarteur (29') qui augmente la hauteur du palier de moteur entre le corps d'essieu avant (17) et l'unité motoréductrice (5).

15. Véhicule automobile (1) selon l'une des revendications précédentes, **caractérisé en ce que** la boîte de transfert (2) est disposée à une hauteur suffisante par rapport au châssis (1') afin de réaliser pour le cadran (6c) destiné à l'essieu arrière (4) un évidement (33) dans la traverse (21) du châssis (1').
